# EUROPEAN PATENT APPLICATION

(11) **EP 4 681 863 A1**
(43) Date of publication of application: **21.01.2026**
(21) Application number: 23930906.5
(22) Date of filing: 12.12.2023
(51) Int. Cl.: B23K 26/356, B23K 26/146

(54) **LASER PEENING METHOD AND LASER PEENING DEVICE**

(30) Priority: 28.03.2023 JP 2023051479
(71) Applicant: Hamamatsu Photonics K.K., Hamamatsu-shi, Shizuoka 435-8558 (JP)
(72) Inventor: WATARI Takeshi, Hamamatsu-shi, Shizuoka 435-8558 (JP); KINE Yuta, Hamamatsu-shi, Shizuoka 435-8558 (JP); KURITA Takashi, Hamamatsu-shi, Shizuoka 435-8558 (JP); SAKAI Koichi, Hamamatsu-shi, Shizuoka 435-8558 (JP); KURATA Masateru, Hamamatsu-shi, Shizuoka 435-8558 (JP)
(74) Representative: Grünecker Patent- und Rechtsanwälte PartG mbB
(86) International application number: PCT/JP2023/044522
(87) International publication number: WO 2024/202285

(57) **Abstract**

This laser peening method includes a placing step of placing an extension jig 12 relative a workpiece W to form an extended surface 15 formed by the extension jig 12 in a region outside a surface Wa of the workpiece in a front view of a machining region K, a forming step of forming a water film P formed by a laminar flow over an irradiation position M2 of a laser beam L and at least a part of the extended surface 15 by discharged water Pw directed to a target position M1, and a machining step of scanning the irradiation position M2 of the laser beam L and the target position M1 of the discharged water Pw with respect to the surface Wa of the workpiece W and irradiating the machining region K with the laser beam L through the water film P.

## Description

### Technical Field

The present disclosure relates to a laser peening method and a laser peening device.

### Background Art

A method called laser peening is known as one of machining techniques for material surfaces. Laser peening is a method in which a workpiece in contact with an interference layer such as water is irradiated with a high-peak pulsed laser beam, and shock waves generated by a pressure of plasma generated in the interference layer are used to generate a peening effect (for example, application of a compressive stress) from a surface of the workpiece to a predetermined depth.

As a technique for laser peening in the related art, for example, there is a method described in, for example, Non-Patent Literature 1. In the method in the related art, a workpiece serving as a machining target is supported by a support substrate, and the support substrate is held by a three-axis robot arm. A surface of the workpiece is provided with a sacrificial layer made of a metal tape or the like from the viewpoint of preventing laser damage to the surface. A nozzle that discharges water is disposed near the workpiece. When a laser beam is radiated toward the workpiece, a water film formed by a laminar flow is formed on the surface of the workpiece by discharged water from the nozzle.

### Citation List

### Patent Literature

[Non-Patent Literature 1] J. Kaufman et al., "The effect of laser shock peening with and without protective coating on intergranular corrosion of sensitized AA5083," Corrosion Science 194 (2022) 109925

### Summary of Invention

### Technical Problem

In the above-described laser peening method in the related art, when the discharged water hits the vicinity of an edge of the surface of the workpiece, the water film formed by the discharged water is likely to be disturbed, making it difficult to stably form a water film formed by a laminar flow. If the water film formed by the laminar flow is not formed stably at an irradiation position of the laser beam, it is conceivable that a plasma confinement effect due to the water film may be weakened, resulting in uneven machining. For example, if a size of the workpiece is small, or if a machining region is near the edge of the surface of the workpiece, there is a lack of space on the surface of the workpiece, and a target position of the discharged water should be set near the edge of the surface of the workpiece, which can cause the above-mentioned problem of uneven machining. Attempting to avoid such a problem may result in restrictions on a design of the machining region on the surface of the workpiece.

The present disclosure has been made to solve the above problems, and an object thereof is to provide a laser peening method and a laser peening device in which it is possible to increase a degree of freedom in designing a machining region on a surface of a workpiece.

### Solution to Problem

A laser peening method according to one aspect of the present disclosure is a laser peening method for performing peening of a workpiece by irradiating a machining region set on a surface of the workpiece with a laser beam, the method including: a placing step of placing an extension jig relative to the workpiece to form an extended surface formed by the extension jig in a region outside the surface of the workpiece in a front view of the machining region; a forming step of forming a water film formed by a laminar flow over an irradiation position of the laser beam and at least a part of the extended surface by discharged water toward a target position; and a machining step of irradiating the machining region with the laser beam through the water film.

In this laser peening method, by placing the extension jig on the workpiece, the extended surface formed by the extension jig is formed in the region outside the surface of the workpiece. By forming such an extended surface, when the machining region is irradiated with the laser beam through the water film, the water film formed by the laminar flow can be formed over the irradiation position of the laser beam and at least a part of the extended surface. Thus, even when a size of the workpiece is small or when the entire surface of the workpiece is the machining region, for example, it is possible to prevent the water film from being disturbed near an edge of the surface of the workpiece. Accordingly, according to this laser peening method, the problem of uneven machining due to the position of the machining region can be solved, and a degree of freedom in designing the machining region on the surface of the workpiece can be increased.

In the placing step, the extended surface formed by the extension jig may be formed above the surface of the workpiece in the front view of the machining region. In this case, the target position of the discharged water can be set above the surface of the workpiece, and the water film formed by the laminar flow can be stably formed on an upper edge of the surface of the workpiece. Accordingly, it is possible to position the machining region near the upper edge of the surface of the workpiece.

In the placing step, the extended surface formed by the extension jig may be formed to surround the surface of the workpiece in the front view of the machining region. In this case, the target position of the discharged water can be set around the surface of the workpiece, and the water film formed by the laminar flow can be stably formed around the entire peripheral edge of the surface of the workpiece. Accordingly, it is possible to position the machining region over the entire edge of the surface of the workpiece.

In the placing step, the extension jig may be placed relative to the workpiece so that the surface of the workpiece and the extended surface formed by the extension jig are flush with each other. In this case, since there is no step between the surface of the workpiece and the extended surface formed by the extension jig, the water film can be formed with a more uniform laminar flow in the machining region.

In the placing step, the extension jig may be placed in close contact with the workpiece to form the surface of the workpiece and the extended surface formed by the extension jig as surfaces in close contact with each other. In this case, since a gap between the surface of the workpiece and the extended surface formed by the extension jig is inhibited, the water film can be formed with a more uniform laminar flow in the machining region.

In the placing step, the extension jig with an arithmetic mean roughness Ra of the extended surface of 20 µm or less may be used. By curbing the roughness of the extended surface, the discharged water flowing through the extended surface can be inhibited from becoming turbulent, and the water film can be formed with a more uniform laminar flow in the machining region.

In the placing step, a holding jig may be placed to hold a back surface of the workpiece and a back surface of the extension jig. In this case, placement of the extension jig relative to the workpiece becomes easier. Also, by holding the back surface of the workpiece with the holding jig, deformation of the workpiece during machining can be inhibited. Accordingly, the peening effect in the machining region can be enhanced.

In the machining step, the irradiation position and the target position may be scanned while a distance between the irradiation position and the target position is kept constant. Thus, the laser beam and the discharged water are stabilized when they hit the surface of the workpiece, and the plasma confinement effect by the water film can be stably generated. Accordingly, the peening effect in the machining region can be enhanced.

In the machining step, the irradiation position and the target position may be set as fixed positions, and the workpiece may be scanned with respect to the irradiation position and the target position. In this case, the irradiation position of the laser beam and the target position of the discharged water during machining can be stabilized. Accordingly, the peening effect in the machining region can be made uniform.

The method may further include a protecting step of placing a sacrificial layer on at least the entire machining region on the surface of the workpiece. By placing the sacrificial layer in the machining region, the surface of the workpiece is protected from the laser beam. Thus, occurrence of roughening, scorching, and unintended effects (for example, application of a tensile stress) on the surface of the workpiece in the machining region can be inhibited.

In the protecting step, the sacrificial layer may be placed to reach the edge of the surface of the workpiece in the front view of the machining region. In this case, since there is no step between the surface of the workpiece and the sacrificial layer, the water film can be formed with a more uniform laminar flow in the machining region.

In the protecting step, the sacrificial layer may be placed to reach the extended surface formed by the extension jig. In this case, when the discharged water is applied to the surface of the workpiece, peeling of the sacrificial layer from the surface of the workpiece can be appropriately inhibited.

A laser peening device according to one aspect of the present disclosure is a laser peening device configured to perform peening by irradiating a machining region set on a surface of a workpiece with a laser beam, the device including: an extension jig that is placed relative to the workpiece and forms an extended surface in a region outside the surface of the workpiece in a front view of the machining region; a discharge unit configured to form a water film formed by a laminar flow over an irradiation position of the laser beam and at least a part of the extended surface by discharged water toward a target position; and a light source unit configured to irradiate the machining region with the laser beam through the water film.

In this laser peening device, the extension jig is placed relative to the workpiece, and the extended surface formed by the extension jig is formed in the region outside the surface of the workpiece. By forming such an extended surface, the water film formed by the laminar flow can be formed over the irradiation position of the laser beam and at least a part of the extended surface. Thus, even when the size of the workpiece is small, or when the entire surface of the workpiece is used as the machining region, for example, it is possible to prevent the water film from being disturbed near the edge of the surface of the workpiece. Accordingly, according to this laser peening device, the problem of uneven machining due to the position of the machining region can be solved, and the degree of freedom in designing the machining region on the surface of the workpiece can be increased.

The laser peening device may further include an adjustment mechanism configured to adjust a positional relationship between the surface of the workpiece and the extended surface formed by the extension jig. In this case, it is possible to eliminate the step between the surface of the workpiece and the extended surface formed by the extension jig, or to form the surface of the workpiece and the extended surface formed by the extension jig as surfaces in close contact with each other. Accordingly, the water film can be formed with a more uniform laminar flow in the machining region.

An arithmetic mean roughness Ra of the extended surface may be 20 µm or less. By curbing the roughness of the extended surface, the discharged water flowing through the extended surface can be inhibited from becoming turbulent, and the water film can be formed with a more uniform laminar flow in the machining region.

### Advantageous Effects of Invention

According to the present disclosure, it is possible to increase the degree of freedom in designing the machining region on the surface of the workpiece.

### Brief Description of Drawings

FIG. 1 is a schematic diagram showing a laser peening device according to an embodiment of the present disclosure.
FIG. 2 is a perspective view showing a state of machining a workpiece using the laser peening device shown in FIG. 1.
FIG. 3 is an exploded perspective view of a holding jig and an extension jig shown in FIG. 2.
FIG. 4 is a flowchart showing a laser peening method according to an embodiment of the present disclosure.
FIG. 5 is a perspective view showing a placing step.
FIG. 6 is a perspective view showing a step subsequent to FIG. 5.
FIG. 7 is a diagram showing a forming step.
FIG. 8 is a diagram showing a machining step.
FIGS. 9(a) to 9(d) are front views showing modified examples of the placing step.
FIGS. 10(a) and 10(b) are front views showing modified examples of the forming step.

### Description of Embodiments

A preferred embodiment of a laser peening method and a laser peening device according to one aspect of the present disclosure will be described in detail below with reference to the drawings.

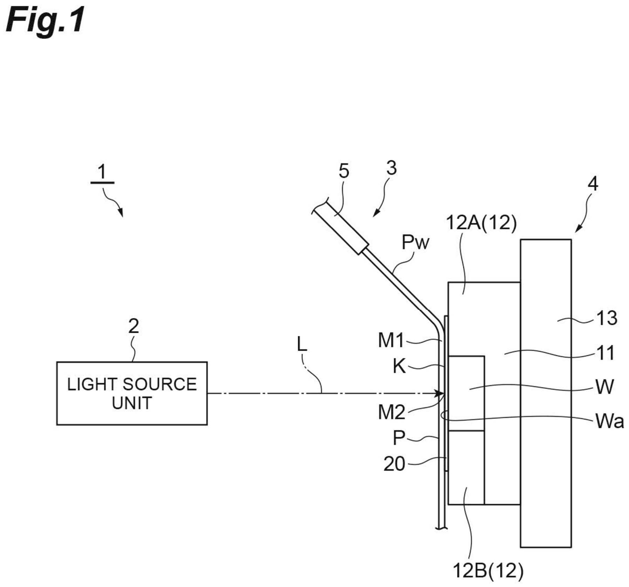

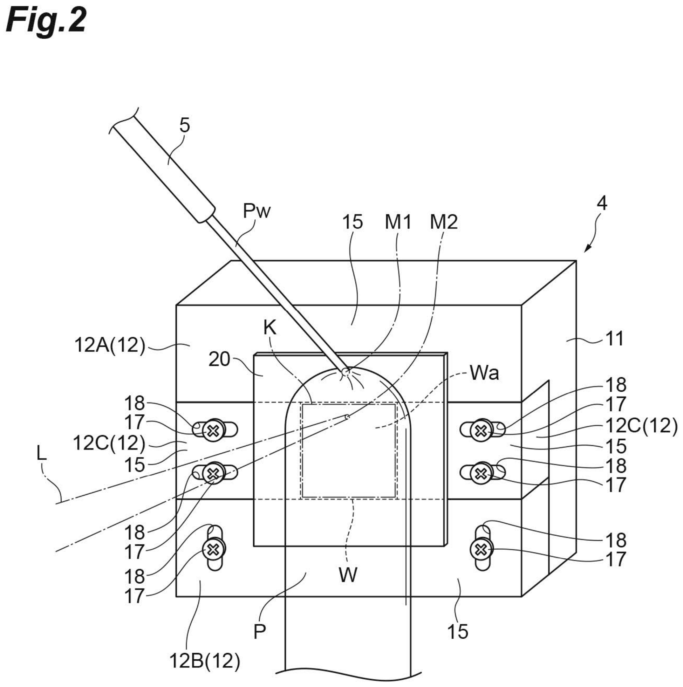

FIG. 1 is a schematic diagram showing a laser peening device according to an embodiment of the present disclosure. Also, FIG. 2 is a perspective view showing a state of machining a workpiece using the laser peening device shown in FIG. 1. The laser peening device 1 shown in FIGS. 1 and 2 is a device that irradiates a workpiece W in contact with an interference layer such as water (here, a water film P, which will be described later) with a high-peak pulsed laser beam, and generates a peening effect (for example, application of a compressive stress) from a surface Wa of the workpiece W to a predetermined depth using shock waves generated by a pressure of plasma generated in the interference layer.

The workpiece W is an object made of various metal materials such as copper, aluminum, and iron. In FIGS. 1 and 2, a rectangular plate-shaped member made of a metal is illustrated as the workpiece W. A size of the surface Wa of the workpiece W is, for example, 10 mm square. A machining region K is set in advance on the surface Wa of the workpiece W depending on a use of the workpiece W or the like. In the present embodiment, the entire one main surface of the workpiece W, which is the rectangular plate-shaped member, is set as the machining region K. That is, in the present embodiment, the machining region K is set up to edges of four sides of the rectangular surface Wa of the workpiece W in a front view of the workpiece W.

As shown in FIGS. 1 and 2, the laser peening device 1 is configured to include, for example, a light source unit 2 that outputs a laser beam L toward the workpiece W, a discharge unit 3 that discharges water (hereinafter referred to as "discharged water Pw") forming the water film P, and a holding unit 4 that holds the workpiece W.

The light source unit 2 is configured to include a light source device that outputs the laser beam L. An operation of the light source unit 2 and output conditions of the laser beam L are controlled by a control unit (not shown). The control unit may be configured by an integrated circuit such as a field-programmable gate array (FPGA). There is no particular restriction on a type of light source device used in the light source unit 2, and various light sources can be used depending on a constituent material of the workpiece W. A wavelength of the laser beam L is selected within a range having absorptivity for the constituent material of the workpiece W. The laser beam L is, for example, pulsed light. As an example, an intensity of the laser beam L is 0. 5 GW/cm² to 20 GW/cm², and a repetition frequency of the laser beam L is 1 Hz.

A light guide optical system (not shown) may be placed between the light source unit 2 and the holding unit 4. The light guide optical system may be configured to include, for example, a reflecting mirror and a condensing lens. The laser beam L emitted from the light source unit 2 is guided along a predetermined optical path by the reflecting mirror, and then focused by the condensing lens and radiated on the surface Wa of the workpiece W (see FIG. 2). A focused diameter of the laser beam L is about 1 mm, for example. A focused shape of the laser beam L is usually circular, but may be elliptical, rectangular, linear, or the like.

The discharge unit 3 is configured to include a nozzle 5 that discharges the discharged water Pw with a predetermined diameter. An operation of the discharge unit 3 and supply conditions of the discharged water Pw are controlled by the above-described control unit. As shown in FIG. 2, for example, the nozzle 5 is placed so that a target position M1 of the discharged water Pw on the surface Wa of the workpiece W is above an irradiation position M2 of the laser beam L. In the present embodiment, the target position M1 of the discharged water Pw is positioned about 5 mm above the irradiation position M2 of the laser beam L. As an example, a discharge rate of the discharged water Pw is 0. 1 L/min to 1 L/min, and a diameter of the discharged water Pw at the target position M1 is 1 mm to 5 mm.

The discharged water Pw discharged from a tip of the nozzle 5 hits the surface Wa of the workpiece W at the target position M1, and forms the water film P formed by the laminar flow below the target position M1 while spreading to a certain width (see FIG. 2). A laminar flow indicates a state in which fluids do not mix with each other and flow regularly in a flowing direction. By stably forming the water film P formed by the laminar flow, a plasma confinement effect by the water film P during radiation of the laser beam L can be sufficiently generated, and occurrence of uneven machining in the machining region K can be inhibited.

A thickness of the water film P is, for example, about 0. 1 to 10 mm, and preferably about 1 mm. If the thickness of the water film P is 0. 1 mm or more, the plasma confinement effect by the water film P during radiation of the laser beam L can be sufficiently generated. If the thickness of the water film P is 10 mm or less, attenuation of the intensity of the laser beam L caused by the water film P can be inhibited even when the laser beam L includes a wavelength range that is absorbed by water.

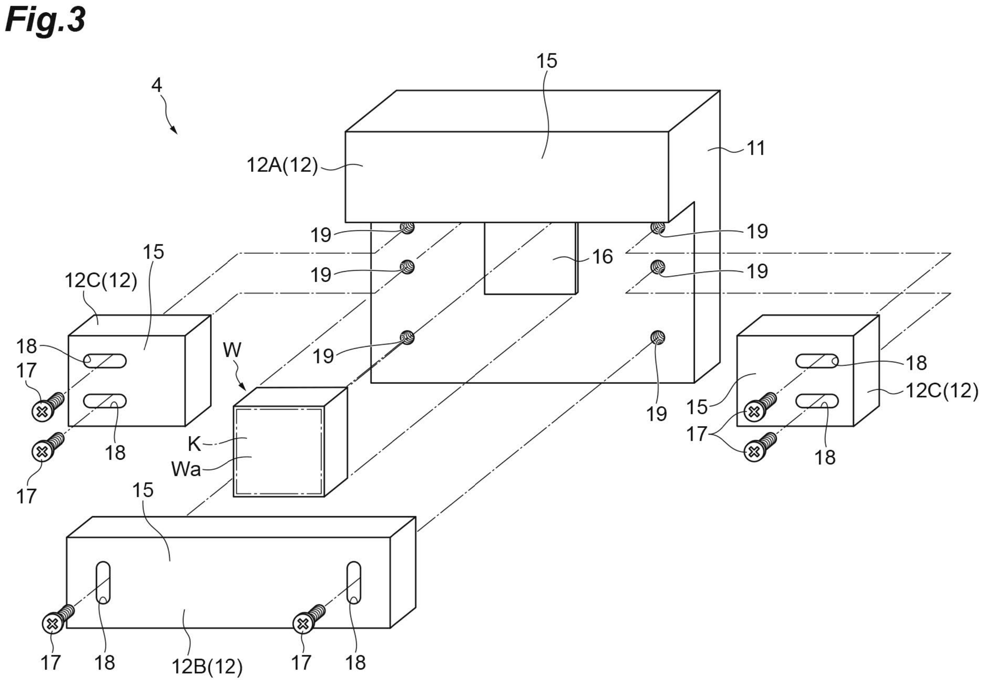

As shown in FIG. 3, the holding unit 4 is configured to include a holding jig 11 and an extension jig 12 that are placed relative to the workpiece W, and a movable stage 13 (see FIG. 1) that holds the holding jig 11 and the extension jig 12. The holding jig 11 is a member that holds a back surface side of the workpiece W. In the present embodiment, the holding jig 11 is configured of a rectangular plate-shaped member that is even larger than the workpiece W. Although a constituent material of the holding jig 11 is not particularly limited, a material having a hardness equal to or greater than a hardness of the workpiece W is preferably used.

In the present embodiment, a rectangular region in a center of the holding jig 11 is a holding region for the workpiece W, and the holding jig 11 itself is held vertically by the movable stage 13, thereby holding the workpiece W so that the surface Wa of the workpiece W is vertical. Since the surface Wa of the workpiece W is vertical, the machining region K is also placed vertically. Accordingly, the water film P on the surface Wa of the workpiece W is also formed by the laminar flow flowing vertically downward.

The extension jig 12 is a jig that forms an extended surface 15 in a region outside the surface Wa of the workpiece W in a front view of the machining region K. In the present embodiment, the extension jig 12 is configured of, for example, a rectangular plate-shaped member having approximately the same thickness as that of the workpiece W, and the entire one main surface of the extension jig 12 is used as the extended surface 15. Although a constituent material of the extension jig 12 is not particularly limited, a material having a hardness equal to or greater than the hardness of the workpiece W is preferably used, similarly to the holding jig 11. The extended surface 15 preferably has smoothness. In the present embodiment, an arithmetic mean roughness Ra of the extended surface 15 is 20 µm or less. Also, in the case of taking close contact with a sacrificial layer 20 into consideration, which will be described later, the arithmetic mean roughness Ra of the extended surface 15 is preferably 10 µm or less. The smoothness of the extended surface 15 can be ensured by surface finishing (for example, mechanical polishing or milling) used for common metal materials.

In the present embodiment, a plurality of extension jigs 12 are prepared for the workpiece W. In the example of FIG. 3, the extension jigs 12 are configured of an upper extension jig 12A, a lower extension jig 12B, and a pair of side extension jigs 12C. The upper extension jig 12A is a jig that forms the extended surface 15 above the surface Wa of the workpiece W in the front view of the machining region K, and the lower extension jig 12B is a jig that forms the extended surface 15 below the surface Wa of the workpiece W in the front view of the machining region K. The pair of side extension jigs 12C are jigs that form the extended surface 15 on left and right sides of the surface Wa of the workpiece W in the front view of the machining region K.

In the example of FIG. 3, each of vertical widths of the upper extension jig 12A, the lower extension jig 12B, and the pair of side extension jigs 12C is approximately the same as a vertical width of the workpiece W. Horizontal widths of the pair of side extension jigs 12C are approximately the same as a horizontal width of the workpiece W. Horizontal widths of the upper extension jig 12A and the lower extension jig 12 are approximately the same as the sum of the horizontal width of the workpiece W and the horizontal widths of the pair of side extension jigs 12C. By respectively placing the upper extension jig 12A, the lower extension jig 12, and the pair of side extension jigs 12C above, below, and on the left and right sides of the workpiece W held in the holding region at the center of the holding jig 11, the extended surface 15 formed by the extension jig 12 is formed to surround the surface Wa of the workpiece W in the front view of the machining region K.

From the viewpoint of the stability of the water film P formed by the laminar flow, the surface Wa of the workpiece W and the extended surface 15 are preferably flush with each other. By making the thickness of the workpiece W and the thickness of the extension jig 12 the same, the surface Wa of the workpiece W and the extended surface 15 can be made flush with each other. Ideally, the surface Wa of the workpiece W and the extended surface 15 are flush with each other, but a slight step may occur due to a dimensional tolerance of the workpiece W or the extension jig 12. In this case, the surface Wa of the workpiece W and the extended surface 15 may be made flush with each other by making the thickness of the extension jig 12 larger than the thickness of the workpiece W and appropriately inserting a shim 16 (see FIG. 3) of a predetermined thickness between the workpiece W and the holding jig 11 as. The shim 16 is one of adjustment mechanisms for adjusting a positional relationship between the surface Wa of the workpiece W and the extended surface 15 formed by the extension jig 12. By using the shim 16, the positional relationship between the surface Wa of the workpiece W and the extended surface 15 formed by the extension jig 12 can be adjusted in a thickness direction of the workpiece W. From the viewpoint of the stability of the water film P formed by the laminar flow, the step in the thickness direction between the surface Wa of the workpiece W and the extended surface 15 may be, for example, 0. 1 mm or less.

Similarly, from the viewpoint of the stability of the water film P formed by the laminar flow, the surface Wa of the workpiece W and the extended surface 15 are preferably surfaces in close contact with each other in their surface directions. Ideally, the close contact here indicates that the surface Wa of the workpiece W and the extended surface 15 are continuous without a gap, but a small gap may occur due to a dimensional tolerance of the workpiece W or the extension jig 12. In this case, the gap is, for example, preferably equal to or smaller than the Rayleigh length of the laser beam L (a distance between the irradiation position M2 of the laser beam L and a position at which a cross-sectional area of the laser beam L is twice the cross-sectional area at the irradiation position M2). The gap may be equal to or smaller than 1/100 of the size of the surface Wa of the workpiece W. Also, the gap may be equal to or smaller than 1/10 of the focused diameter of the radiated laser beam L. In the present embodiment, the size of the surface Wa of the workpiece W is 10 mm square, and the gap is preferably 0. 1 mm or less.

In the present embodiment, the upper extension jig 12A is provided integrally with the holding jig 11. The upper extension jig 12A may be configured of a thick portion of the holding jig 11, or may be configured by joining s separate plate-shaped member to the holding jig 11 by adhesion, welding, or the like. Also, in the present embodiment, as one of the adjustment mechanisms for adjusting the positional relationship between the surface Wa of the workpiece W and the extended surface 15 formed by the extension jig 12, the extension jig 12 is provided with screws 17, long holes 18, and screw holes 19. Due to the screws 17 and long holes 18, the positional relationship between the surface Wa of the workpiece W and the extended surface 15 formed by the extension jig 12 can be adjusted in an in-plane direction of the surface Wa of the workpiece W.

Here, the screws 17 are used to fix the lower extension jig 12 and the pair of side extension jigs 12C to the holding jig 11, and the holding jig 11 is provided with a plurality of screw holes 19 corresponding to the long holes 18. Also, the lower extension jig 12 is provided with the long holes 18 whose major axis is the vertical direction, and the pair of side extension jigs 12C are provided with the long holes 18 whose major axis is the horizontal direction. A specific fixing direction of the lower extension jig 12 and the pair of side extension jigs 12C will be described later.

The movable stage 13 is configured by, for example, an XY stage. An operation of the movable stage 13 is controlled by the above-described control unit. As shown in FIG. 1, the movable stage 13 holds the holding jig 11 to which the workpiece W and the extension jig 12 are fixed so that the surface Wa of the workpiece W is orthogonal to an optical axis of the laser beam L, and moves the holding jig 11 in the vertical and horizontal directions within a plane of the surface Wa of the workpiece W. Thus, the irradiation position M2 and the target position M1 on the surface Wa of the workpiece W are scanned while a distance between the irradiation position M2 of the laser beam L and the target position M1 of the discharged water Pw is kept constant.

From the viewpoint of preventing laser damage to the surface Wa of the workpiece W during machining, the sacrificial layer 20 is placed on the surface of the workpiece W at least over the entire machining region K, as shown in FIG. 2. A thickness of the sacrificial layer 20 is, for example, about 10 µm to 1000 µm, and preferably about 100 µm. By setting the thickness of the sacrificial layer 20 to be 10 µm or more, occurrence of roughening, scorching, and unintended effects (for example, application of a tensile stress) of the surface Wa of the workpiece W in the machining region K can be appropriately inhibited.

The sacrificial layer 20 may be made of paint or oil, but here a metal tape with a thickness of about 100 µm is used. The sacrificial layer 20 has, for example, a rectangular shape and is placed to reach the edge of the surface Wa of the workpiece W in the front view of the machining region K. In the present embodiment, the entire surface Wa of the workpiece W is set as the machining region K, and the sacrificial layer 20 extends to the edges of the four sides of the surface Wa of the workpiece W.

Further, in the present embodiment, the sacrificial layer 20 has a rectangular shape that is slightly larger than the surface Wa of the workpiece W, and extends beyond the edges of the four sides of the surface Wa of the workpiece W to reach the respective extended surfaces 15 of the upper extension jig 12A, the lower extension jig 12, and the pair of side extension jigs 12C. By extending the sacrificial layer 20 to reach the extended surfaces 15, the target position M1 of the discharged water Pw overlaps the sacrificial layer 20 when the irradiation position M2 and the target position M1 on the surface Wa of the workpiece W are scanned. For this reason, the water film P formed by the laminar flow is formed below the target position M1 without being affected by a step between the surface Wa of the workpiece W and the sacrificial layer 20 due to the thickness of the sacrificial layer 20.

In the case of forming the sacrificial layer 20 with a metal tape as in the present embodiment, it is conceivable that, when a pressure of plasma is generated by radiation of the laser beam L, the pressure of plasma generates a force that causes the sacrificial layer 20 to extend in the in-plane direction. When this force acts on the edge of the sacrificial layer 20, it is assumed that the force acts in a direction in which the sacrificial layer 20 is peeled off from the surface Wa of the workpiece W. Accordingly, by placing the sacrificial layer 20 to reach the extended surface 15 and removing the edge of the sacrificial layer 20 from the irradiation position M2 of the laser beam L, it is possible to inhibit the peeling of the sacrificial layer 20 due to the action of the above force.

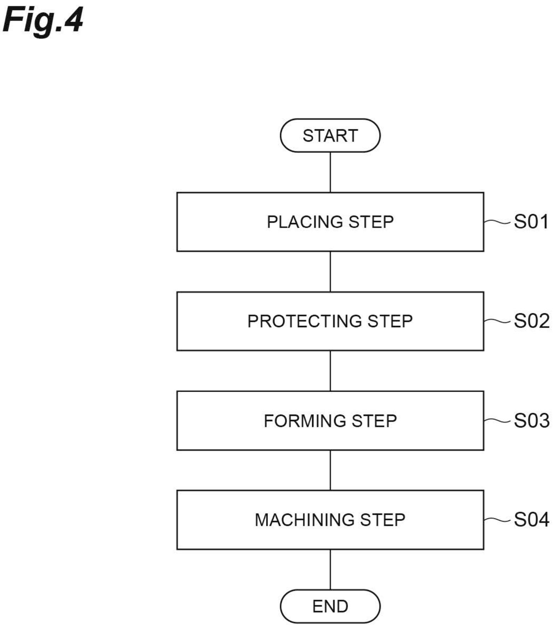

Next, a laser peening method according to an embodiment of the present disclosure will be described. FIG. 4 is a flowchart showing the laser peening method according to the embodiment of the present disclosure. As shown in FIG. 4, this laser peening method includes a placing step (step S01), a protecting step (step S02), a forming step (step S03), and a machining step (step S04). In the present embodiment, each step of the laser peening method is implemented using the above-described laser peening device 1.

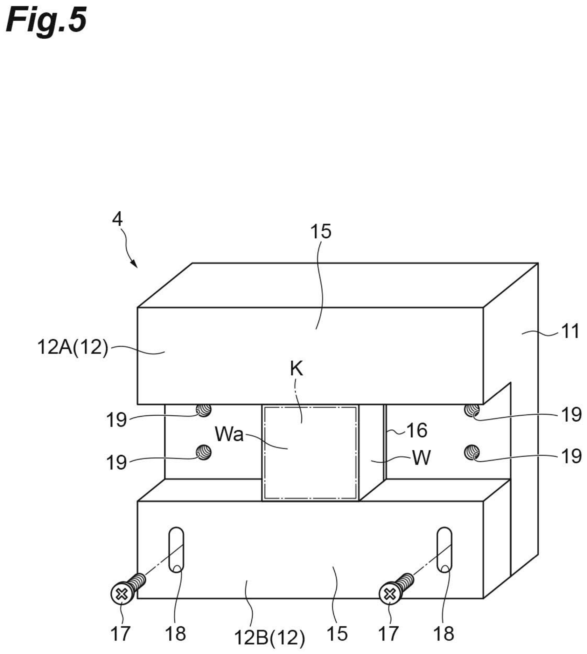

The placing step is a step of placing the extension jig 12 relative to the workpiece W and forming the extended surface 15 formed by the extension jig 12 in the region outside the surface Wa of the workpiece W in the front view of the machining region K. Specifically, in the placing step, as shown in FIG. 5, the workpiece W is first set in the holding region at the center of the holding jig 11 in the holding unit 4,. In this case, if necessary, the shim 16 is placed between the workpiece W and the holding jig 11, and the positional relationship is adjusted so that the surface of the workpiece W and the extended surface 15 of the extension jig 12 are flush with each other.

Next, by bringing an upper surface of the workpiece W into abutment with a lower surface of the upper extension jig 12A, the workpiece W is positioned relative to the upper extension jig 12A. Thus, an upper edge of the surface Wa of the workpiece W and the extended surface 15 of the upper extension jig 12A are brought into close contact with each other. After the workpiece W is positioned relative to the upper extension jig 12A, an upper surface of the lower extension jig 12 is brought into abutment with a lower surface of the workpiece W, and the workpiece W is vertically interposed between the upper extension jig 12A and the lower extension jig 12 to position the lower extension jig 12 relative to the workpiece W. In this state, by screwing the screws 17 into the screw holes 19 of the holding jig 11 through the long holes 18, the lower extension jig 12 is fixed to the holding jig 11 while a lower edge of the surface Wa of the workpiece W and the extended surface 15 of the lower extension jig 12 are in close contact with each other.

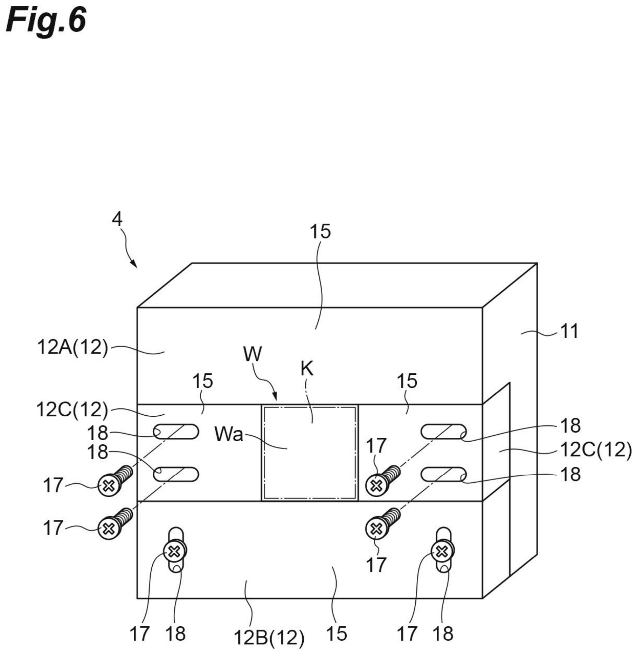

After the lower extension jig 12 is fixed, as shown in FIG. 6, the pair of side extension jigs 12C are placed so that the workpiece W is interposed between the upper extension jig 12A and the lower extension jig 12 on the left and right sides. Then, side surfaces of the pair of side extension jigs 12C are respectively brought into abutment with the left and right sides of the workpiece W to position the pair of side extension jigs 12C relative to the workpiece W. In this state, by screwing the screws 17 into the screw holes 19 of the holding jig 11 through the long holes 18, the pair of side extension jigs 12C are fixed to the holding jig 11 while right and left edges of the surface Wa of the workpiece W and the respective extended surfaces 15 of the pair of side extension jigs 12C are in close contact with each other.

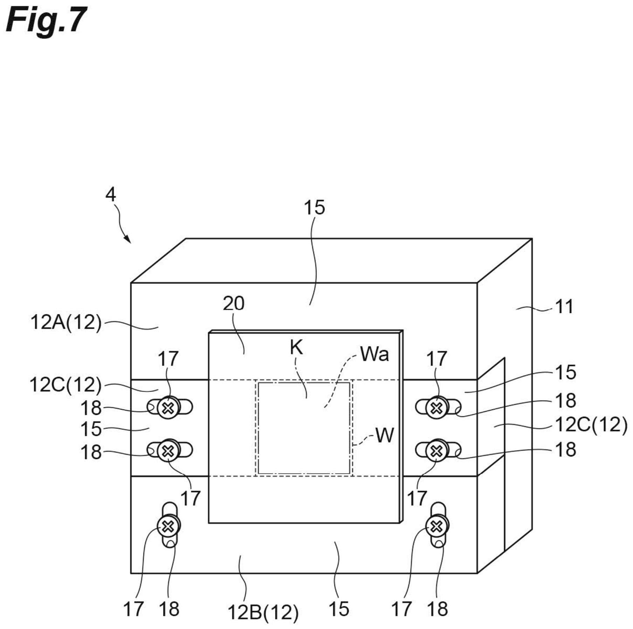

The protecting step is a step of placing the sacrificial layer 20 at least over the entire machining region K. In the present embodiment, as shown in FIG. 7, the entire surface Wa of the workpiece W is set as the machining region K, and the rectangular sacrificial layer 20 is placed to reach the edges of the four sides of the surface Wa of the workpiece W in the front view of the machining region K. In the present embodiment, the rectangular sacrificial layer 20 that is even larger than the surface Wa of the workpiece W is used, and the sacrificial layer 20 is placed beyond the edges of the four sides of the surface Wa of the workpiece W to reach the respective extended surfaces 15 formed by the upper extension jig 12A, the lower extension jig 12, and the pair of side extension jigs 12C. An amount of protrusion of the sacrificial layer 20 from the edges of the four sides of the surface Wa of the workpiece W toward the extended surface 15 is, for example, about 3 mm to 4 mm.

The forming step is a step of forming the water film P formed by the laminar flow over the irradiation position M2 of the laser beam L and at least a part of the extended surface 15 with the discharged water Pw directed to the target position M1. In the forming step, the discharged water Pw discharged from the tip of the nozzle 5 hits the surface Wa of the workpiece W at the target position M1 to form the water film P formed by the laminar flow below the target position M1. In the above-described protecting step, the sacrificial layer 20 is placed to reach the respective extended surfaces 15 formed by the upper extension jig 12A, the lower extension jig 12, and the pair of side extension jigs 12C. For this reason, in the present embodiment, the target position M1 of the discharged water Pw overlaps the sacrificial layer 20, and the discharged water Pw does not directly hit the surface Wa of the workpiece W at the target position M1, but is configured to hit the sacrificial layer 20 (see FIG. 2).

The machining step is a step of irradiating the machining region K with the laser beam L through the water film P. By radiating the laser beam L, plasma is generated in the water film P serving as the interference layer. The shock waves generated by the pressure of the plasma produces a peening effect (for example, application of a compressive stress) from the surface Wa of the workpiece W to a predetermined depth. During radiation of the laser beam L, the sacrificial layer 20 provided on the surface Wa of the workpiece W prevents laser damage to the surface Wa of the workpiece W.

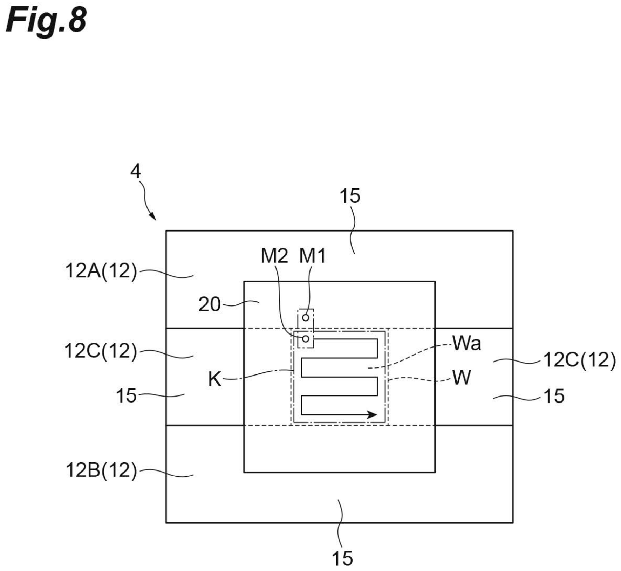

In the machining step, as shown in FIG. 8 (the screws 17 and the long holes 18 are not shown), the irradiation position M2 and the target position M1 are scanned while the distance between the irradiation position M2 and the target position M1 is kept constant. In the present embodiment, the irradiation position M2 and the target position M1 are set as fixed positions, and the holding jig 11 holding the workpiece W and the extension jig 12 is moved vertically and horizontally by the movable stage 13, thereby scanning the irradiation position M2 and the target position M1 on the surface Wa of the workpiece W. The example of FIG. 8 shows bidirectional horizontal scanning (scanning in one horizontal direction, then scanning in the vertical direction, and then scanning in the other horizontal direction). The scanning order is not limited to the above, and may be vertical bidirectional scanning (scanning in one vertical direction, then scanning downward in the horizontal direction, then scanning in the other vertical direction).

As described above, in the laser peening device 1 and the laser peening method, by placing the extension jig 12 relative to the workpiece W, the extended surface 15 formed by the extension jig 12 is formed in the region outside the surface Wa of the workpiece W. By forming the extended surface 15 in this way, the water film P formed by the laminar flow can be formed over the irradiation position M2 of the laser beam L and at least a part of and the extended surface 15. Thus, even if the size of the workpiece W is small, or if the entire surface of the workpiece W is used as the machining region K, it is possible to prevent disturbance of the water film P near the edge of the surface Wa of the workpiece W, for example. Accordingly, according to the laser peening device 1 and the laser peening method, the problem of uneven machining due to the position of the machining region K can be solved, and the degree of freedom in designing the machining region K on the surface Wa of the workpiece W can be increased.

In the placing step, the extended surface 15 formed by the extension jig 12 is formed above the surface Wa of the workpiece W in the front view of the machining region K. Thus, the target position M1 of the discharged water Pw can be set above the surface Wa of the workpiece W, and the water film P formed by the laminar flow can be stably formed on the upper edge of the surface of the workpiece W. Accordingly, it is possible to position the machining region K near the upper edge of the surface Wa of the workpiece W.

In the placing step, the extended surface 15 formed by the extension jig 12 is formed to surround the surface Wa of the workpiece W in the front view of the machining region. Thus, the target position M1 of the discharged water Pw can be set around the surface Wa of the workpiece W, and the water film P formed by the laminar flow can be stably formed around the entire peripheral edge of the surface Wa of the workpiece W. Accordingly, it is possible to position the machining region K over the entire edge of the surface Wa of the workpiece W.

In the placing step, the extension jig is placed relative to the workpiece W so that the surface Wa of the workpiece W and the extended surface 15 formed by the extension jig 12 are flush with each other. Thus, since there is no step between the surface Wa of the workpiece W and the extended surface 15 of the extension jig 12, the water film P can be formed with a more uniform laminar flow in the machining region K.

In the placing step, the extension jig 12 is brought into close contact with the workpiece W to form the surface Wa of the workpiece W and the extended surface 15 formed by the extension jig 12 as surfaces in close contact with each other. Thus, since the gap between the surface Wa of the workpiece W and the extended surface 15 formed by the extension jig 12 is inhibited, the water film P can be formed with a more uniform laminar flow in the machining region K.

In the placing step, the extension jig 12 with an arithmetic mean roughness Ra of the extended surface 15 of 20 µm or less is used. By curbing the roughness of the extended surface 15, the discharged water Pw flowing through the extended surface 15 can be inhibited from becoming turbulent, and the water film P can be formed with a more uniform laminar flow in the machining region K. Further, by using the extension jig 12 with an arithmetic mean roughness Ra of the extended surface 15 of 10 µm or less, the close contact of the sacrificial layer 20 to the extended surface 15 can be sufficiently ensured.

In the placing step, the holding jig 11 that holds the back surface of the workpiece W and the back surface of the extension jig 12 is placed. This facilitates the placement of the extension jig 12 relative to the workpiece W. Also, by holding the back surface of the workpiece W with the holding jig 11, deformation of the workpiece W during machining can be inhibited. Accordingly, the peening effect in the machining region K can be enhanced.

In the machining step, the irradiation position M2 and the target position M1 are scanned while the distance between the irradiation position M2 and the target position M1 is kept constant. Thus, the laser beam L and the discharged water Pw are stabilized when they hit the surface Wa of the workpiece W, and the plasma confinement effect provided by the water film P can be stably generated. Accordingly, the peening effect in the machining region K can be enhanced.

In the machining step, the irradiation position M2 and the target position M1 are set as fixed positions, and the workpiece W is scanned with respect to the irradiation position M2 and the target position M1. In this case, by fixing the light guide optical system of the laser beam L and the nozzle 5 of the discharged water Pw, the irradiation position M2 of the laser beam L and the target position M1 of the discharged water Pw can be stabilized during machining. Accordingly, the peening effect in the machining region K is made uniform.

In the protecting step, the sacrificial layer 20 is placed over at least the entire machining region K on the surface Wa of the workpiece W. By placing the sacrificial layer 20 in the machining region K, the surface Wa of the workpiece W is protected from the laser beam L. Thus, occurrence of roughening, scorching, and unintended effects (for example, application of a tensile stress) on the surface Wa of the workpiece W in the machining region K can be inhibited.

In the protecting step, the sacrificial layer 20 is placed to reach the edge of the surface Wa of the workpiece W in the front view of the machining region K. Thus, since there is no step between the surface Wa of the workpiece W and the sacrificial layer 20, the water film can be formed with a more uniform laminar flow in the machining region K. Further, in the protecting step, the sacrificial layer 20 is placed to reach the extended surface 15 formed by the extension jig 12. For this reason, when the discharged water Pw hits the surface Wa of the workpiece W, peeling of the sacrificial layer 20 from the surface Wa of the workpiece W can be appropriately inhibited.

The laser peening device 1 is provided with the adjustment mechanism (the shim 16, the screws 17, the long holes 18, and the screw holes 19) to adjust the positional relationship between the surface Wa of the workpiece W and the extended surface 15 formed by the extension jig 12. The employment of such an adjustment mechanism makes it possible to eliminate the step between the surface Wa of the workpiece W and the extended surface 15 formed by the extension jig 12, or to form the surface Wa of the workpiece W and the extended surface 15 formed by the extension jig 12 as surfaces in close contact with each other. Accordingly, the water film P can be formed with a more uniform laminar flow in the machining region K.

Also, in the laser peening device 1, the arithmetic mean roughness Ra of the extended surface 15 in the extension jig 12 is 20 µm or less. By curbing the roughness of the extended surface 15, the discharged water Pw flowing through the extended surface 15 can be inhibited from becoming turbulent, and the water film P can be formed with a more uniform laminar flow in the machining region K.

The present disclosure is not limited to the above embodiment. For example, in the above embodiment, the entire surface Wa of the workpiece W is set as the machining region K, but the setting of the machining region K is arbitrary, and a part of the surface Wa of the workpiece W may be set as the machining region K. The machining region K may be set in a line shape or in a point shape. A point-like machining region is, for example, a region that is machined by radiating the laser beam L once without scanning the surface Wa of the workpiece W with the laser beam L. That is, the point-like machining region is, for example, a region corresponding to the focused diameter of the laser beam L.

In the above embodiment, when the irradiation position M2 and the target position M1 are scanned, the sacrificial layer 20 protruding to the extended surface 15 is included in the target position M1 of the discharged water Pw, but the extended surface 15 itself may be included in the target position M1. In the above embodiment, the irradiation position M2 and the target position M1 are set as fixed positions, and workpiece W is scanned with respect to the irradiation position M2 and the target position M1, but the workpiece W may be set at a fixed position, and the irradiation position M2 and the target position M1 may be scanned with respect to the workpiece W.

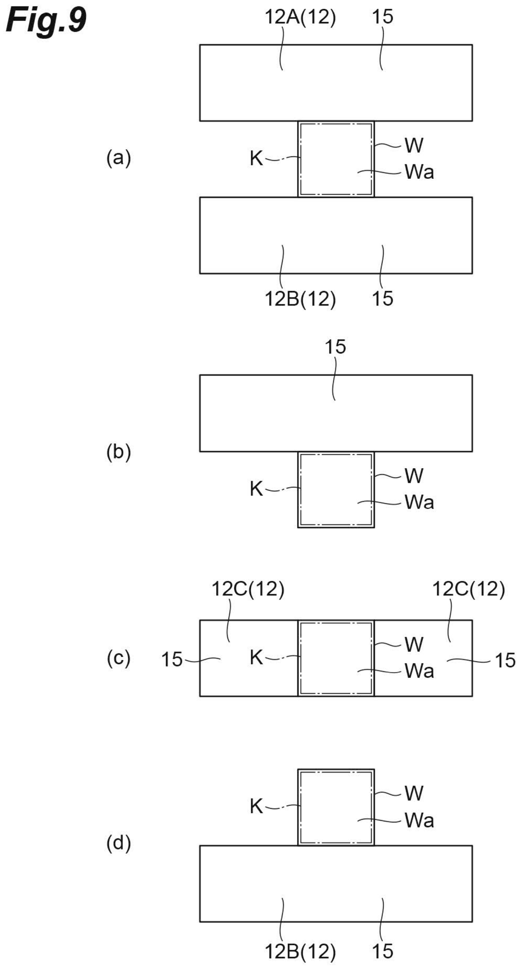

In the above embodiment, the extended surface 15 formed by the extension jig 12 is formed above, below, and on the left, and right sides of the surface Wa of the workpiece W to surround the surface Wa of the workpiece W, but the manner of forming the extended surface 15 is not limited to this, and various modifications can be made depending on the setting of the machining region K. For example, as shown in FIG. 9(a), only the upper extension jig 12A and the lower extension jig 12 may be used to form the extended surface 15 on the upper and lower sides of the surface Wa of the workpiece W, or as shown in FIG. 9(b), only the upper extension jig 12A may be used to form the extended surface 15 only on the upper side of the surface Wa of the workpiece W. As shown in FIG. 9(c), only the pair of side extension jigs 12C may be used to form the extended surface 15 on the left and right sides of the surface Wa of the workpiece W, or as shown in FIG. 9(d), only the lower extension jig 12 may be used to form the extended surface 15 only on the lower side of the surface Wa of the workpiece W. As a further modification of FIG. 9(c), only one of the pair of side extension jigs 12C may be used to form the extended surface 15 on either the left or right side of the surface Wa of the workpiece W.

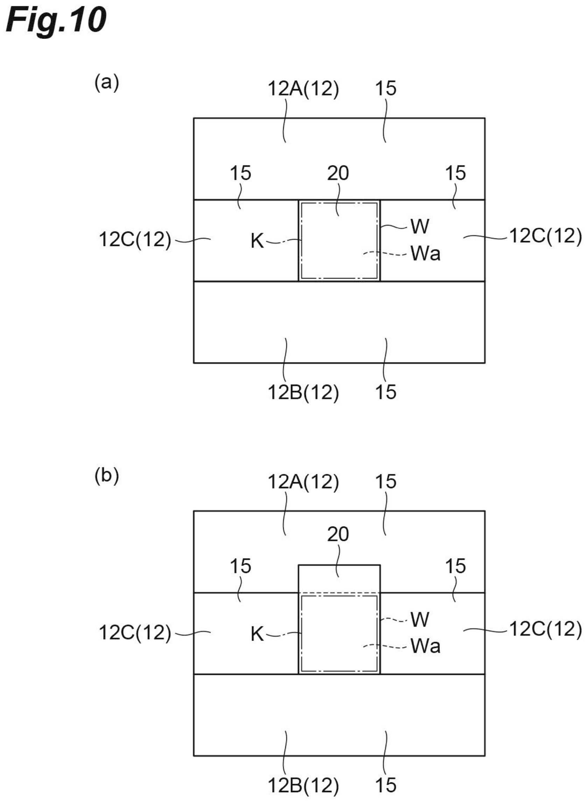

In the above embodiment, the sacrificial layer 20 extends beyond the edges of the four sides of the surface Wa of the workpiece W to reach the respective extended surfaces 15 formed by the upper extension jig 12A, the lower extension jig 12, and the pair of side extension jigs 12C, but the manner of placing the sacrificial layer 20 is not limited to this, and various modifications can be made depending on the setting of the machining region K. For example, as shown in FIG. 10(a), the sacrificial layer 20 may be aligned with the edges of the four sides of the surface Wa of the workpiece W, or as shown in FIG. 10(b), the sacrificial layer 20 may be placed to reach only the upper extended surface 15 of the surface Wa of the workpiece W. Although not shown, the sacrificial layer 20 may be placed to reach the extended surface 15 in one or more arbitrary directions on the surface Wa of the workpiece W.

In the present embodiment, a rectangle is exemplified as the shape of the surface Wa of the workpiece W (shape of the workpiece W in the front view), but the shape of the surface Wa of the workpiece W may be other shapes such as a circle, an ellipse, or a polygon. The shape of the extended surface 15 of the extension jig 12 can also be other than a rectangle depending on the shape of the surface Wa of the workpiece W.

In the present embodiment, the surface Wa of the workpiece W and the extended surface 15 are flush with each other, but the surface Wa of the workpiece W and the extended surface 15 do not necessarily have to be flush with each other as long as the water film P formed by the laminar flow is formed over the irradiation position M2 of the laser beam L and at least a part of the extended surface 15. That is, a step may be formed between the surface Wa and the extended surface 15 as long as the water film P formed by the laminar flow is formed over the irradiation position M2 of the laser beam L and at least a part of the extended surface 15. Such a step may be formed to be larger than 0. 1 mm, for example.

Also, in the present embodiment, the surface Wa of the workpiece W and the extended surface 15 are close to each other in the direction of their surfaces. However, as long as the water film P formed by the laminar flow is formed over the irradiation position M2 of the laser beam L and at least a part of the extended surface 15, a gap in the surface direction between the surface Wa of the workpiece W and the extended surface 15 may be generated. Such a gap may be formed to be larger than 0. 1 mm, for example.

### Reference Signs List

1 Laser peening device, 2 Light source unit, 3 Discharge unit, 11 Holding jig, 12 Extension jig, 15 Extended surface, 16 Shim (adjustment mechanism), 17 Screw (adjustment mechanism), 18 Long hole (adjustment mechanism), 19 Screw hole (adjustment mechanism), 20 Sacrificial layer, W Workpiece, Wa Surface, K Machining region, L Laser beam, M1 Target position, M2 Irradiation position, P Water film, Pw Discharged water

## Claims

1. A laser peening method for performing peening by irradiating a machining region set on a surface of a workpiece with a laser beam, comprising:
a placing step of placing an extension jig relative to the workpiece and forming an extended surface formed by the extension jig in a region outside the surface of the workpiece in a front view of the machining region;
a forming step of forming a water film formed by a laminar flow over an irradiation position of the laser beam and at least a part of the extended surface by discharged water directed to a target position; and
a machining step of irradiating the machining region with the laser beam through the water film.

2. The laser peening method according to claim 1, wherein, in the placing step, the extended surface formed by the extension jig is formed above the surface of the workpiece in the front view of the machining region.

3. The laser peening method according to claim 1 or 2, wherein, in the placing step, the extended surface formed by the extension jig is formed to surround the surface of the workpiece in the front view of the machining region.

4. The laser peening method according to any one of claims 1 to 3, wherein, in the placing step, the extension jig is placed on the workpiece so that the surface of the workpiece and the extended surface formed by the extension jig are flush with each other.

5. The laser peening method according to any one of claims 1 to 4, wherein, in the placing step, the extension jig is brought into close contact with the workpiece to form the surface of the workpiece and the extended surface formed by the extension jig as surfaces in close contact with each other.

6. The laser peening method according to any one of claims 1 to 5, wherein, in the placing step, the extension jig with an arithmetic mean roughness Ra of the extended surface of 20 µm or less is used.

7. The laser peening method of any one of claims 1 to 6, wherein, in the placing step, a holding jig that holds a back surface of the workpiece and a back surface of the extension jig is placed.

8. The laser peening method of any one of claims 1 to 7, wherein, in the machining step, the irradiation position and the target position are scanned while a distance between the irradiation position and the target position is kept constant.

9. The laser peening method of any one of claims 1 to 8, wherein in the machining step, the irradiation position and the target position are set as fixed positions, and the workpiece is scanned with respect to the irradiation position and the target position.

10. The laser peening method of any one of claims 1 to 9, further comprising a protecting step of placing a sacrificial layer over at least the entire machining region on the surface of the workpiece.

11. The laser peening method according to claim 10, wherein, in the protecting step, the sacrificial layer is placed to reach an edge of the surface of the workpiece in the front view of the machining region.

12. The laser peening method according to claim 10 or 11, wherein, in the protecting step, the sacrificial layer is placed to reach the extended surface formed by the extension jig.

13. A laser peening device configured to perform peening by irradiating a machining region set on a surface of a workpiece with a laser beam, comprising:
an extension jig that is placed relative to the workpiece and forms an extended surface in a region outside the surface of the workpiece in a front view of the machining region;
a discharge unit configured to form a water film formed by a laminar flow over an irradiation position of the laser beam and at least a part of the extended surface by discharged water directed to a target position; and
a light source unit configured to irradiate the machining region with the laser beam through the water film.

14. The laser peening device according to claim 13, further comprising an adjustment mechanism configured to adjust a positional relationship between the surface of the workpiece and the extended surface formed by the extension jig.

15. The laser peening device according to claim 13 or 14, wherein an arithmetic mean roughness Ra of the extended surface is 20 µm or less.
